# EUROPÄISCHE PATENTSCHRIFT

(11) **EP 1 782 675 B1**
(45) Veröffentlichungstag und Bekanntmachung des Hinweises auf die Patenterteilung: **11.06.2008**
(21) Anmeldenummer: 06022473.0
(22) Anmeldetag: 27.10.2006
(51) Int. Cl.: A01D 78/10

(54) **Heuwerbungsmaschine**
Hay-making machine
Machine de fenaison

(30) Priorität: 04.11.2005 DE 102005053060
(43) Veröffentlichungstag der Anmeldung: 09.05.2007
(73) Patentinhaber: LTH Landtechnik Hohenmölsen GmbH, 06679 Hohenmölsen (DE)
(72) Erfinder: Daferner, Gerhard, 86554 Pöttmes (DE); Frinzl, Richard, 86529 Schrobenhausen (DE)
(74) Vertreter: Rapp, Bertram

(56) Entgegenhaltungen:
- EP-A2- 0 381 970
- DE-U1- 9 114 316
- DE-U1- 9 312 222
- GB-A- 956 672
- US-A- 3 896 613

## Beschreibung

Die Erfindung betrifft eine Heuwerbungsmaschine nach dem Oberbegriff des Anspruchs 1. Eine solche Heuwerbungsmaschine ist aus der EP 0 381 970 A2 bekannt. Dabei sind die Ausleger, welche Arbeitskreisel mit jeweils mehreren Rechen tragen, teleskopartig ausgebildet und erlauben hierdurch eine Verstellung ihrer Länge. Beim Hochklappen der Arbeitskreisel von der annähernd waagrechten Arbeitsstellung in die annähernd senkrechte Transportstellung werden die Ausleger in ihrer Länge verkürzt, wodurch sich eine geringere Höhe der Maschine in der Transportstellung ergibt, die für die Durchfahrt durch Unterführungen oder Tore erwünscht ist.

Ein anderer Weg zur Erzielung einer geringen Maschinenhöhe in der Transportstellung wird in der EP 0 484 794 B1 gelehrt. Dort ist vorgesehen, beim Hochklappen der Arbeitskreisel in die Transportstellung das Maschinengestell in dem Bereich, in dem die Ausleger mit den Arbeitskreiseln angebracht sind, abzusenken. Eine weitere Lösung, die zum Stand der Technik gehört, besteht in einer teilweisen Demontage der Rechen der Arbeitskreisel zur Vorbereitung der Transportstellung und erfordert somit einen relativ großen Arbeitsaufwand.

Das Problem der Maschinenhöhe beim Hochklappen der Arbeitskreisel ergibt sich grundsätzlich daraus, dass die Arbeitskreisel in der Arbeitsstellung einen gewissen Arbeitsabstand voneinander haben müssen, dessen Größe insbesondere von der zu bearbeitenden Futtermenge abhängt. Ohne zusätzliche Maßnahmen würde ein senkrechtes Hochklappen der Arbeitskreisel daher stets zu einer Höhe führen, die ungefähr dem Kreiseldurchmesser zuzüglich des halben Arbeitsabstandes entspricht.

Aus der DE 91 14 316 U1 ist eine Heuwerbungsmaschine bekannt, deren Arbeitskreisel durch Gelenkwellen angetrieben werden, welche von einem zentralen Verteilergetriebe ausgehen und teilweise schräg zum Maschinengestell verlaufen. Da diese Maschine nur für eine relativ geringe Arbeitsbreite bzw. zum Seitenschwaden mit überlappenden Arbeitsbereichen der Kreisel ausgelegt ist, ergibt sich beim Hochklappen der Ausleger durch eine geeignete Schwenkbewegung auch ohne zusätzliche Maßnahmen bereits eine Transportstellung von ausreichend geringer Höhe. Die Ausleger dieser Maschine haben daher eine feste Länge, so dass auch an den Antriebsstrang keine nennenswerten Anforderungen in Bezug auf eine Längenvariation bestehen.

In Anbetracht des Standes der Technik besteht die Aufgabe der Erfindung darin, für eine Heuwerbungsmaschine mit großem und/oder variablem Arbeitsabstand der Arbeitskreisel eine neue und zweckmäßige Lösung zur Erzielung einer geringen Höhe in der Transportstellung zu schaffen.

Diese Aufgabe wird erfindungsgemäß durch eine Heuwerbungsmaschine mit den Merkmalen des Anspruchs 1 gelöst. Vorteilhafte Ausgestaltungen sind in den Unteransprüchen angegeben.

Durch die erfindungsgemäße Schrägstellung der Kreiselantriebswellen wird erreicht, daß eine Verkürzung des Auslegers um eine bestimmte Strecke mit einer deutlich geringeren Verkürzung der Kreiselantriebswelle einhergeht. Dies ist deshalb wichtig, weil einer Längenverstellung, insbesondere mittels einer Teleskopstruktur, bei Antriebswellen bzw. Gelenkwellen wegen der an diese gestellten Stabilitäts-, Gelenkabstands- und Toleranzanforderungen wesentlich engere Grenzen gesetzt sind als einer Längenverstellung eines Auslegers, der keine Antriebsfunktion zu erfüllen hat.

Durch ein Hinausragen der Ausleger über die Drehachsen der Arbeitskreisel, und zwar mit einer zurückragenden Befestigung, die es erlaubt, dass das Innenrohr des Teleskops jeweils über die Drehachse des Arbeitskreisels zurück in das Außenrohr eingezogen werden kann, wird der Verstellbereich der Arbeitskreisel in der hochgeklappten Transportstellung in der Richtung nach unten erweitert.

Weitere Vorteile und Merkmale der Erfindung gehen aus der nachfolgenden Beschreibung eines Ausführungsbeispiels unter Bezugnahme auf die Zeichnungen hervor. In diesen zeigt
- Fig. 1: schematische Seitenansichten einer erfindungsgemäßen Heuwerbungsmaschine mit vier Arbeitskreiseln,
- Fig. 2: eine schematische Draufsicht auf eine erfindungsgemäße Heuwerbungsmaschine mit zwei Arbeitskreiseln,
- Fig. 3: einen vergrößerten Ausschnitt aus Fig. 2,
- Fig. 4: eine schematische Ansicht von vorne einer erfindungsgemäßen Heuwerbungsmaschine in einer ersten Transportstellung,
- Fig. 5: eine schematische Ansicht von vorne einer erfindungsgemäßen Heuwerbungsmaschine in einer zweiten Transportstellung,
- Fig. 6: einen vergrößerten Ausschnitt aus Fig. 5,
- Fig. 7: eine schematische Ansicht von vorne einer erfindungsgemäßen Heuwerbungsmaschine in zwei verschiedenen Arbeitsstellungen,
- Fig. 8: eine Ansicht von vorne eines in einer erfindungsgemäßen Heuwerbungsmaschine verwendeten Getriebes, und
- Fig. 9: einen Schnitt durch das Getriebe von Fig. 8 in einer Ansicht von oben.

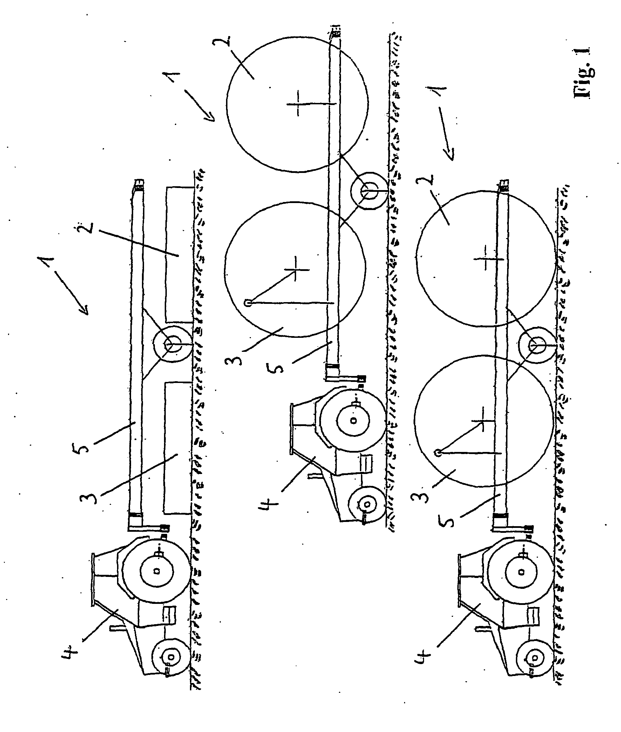

In Fig. 1 ist eine erfindungsgemäße Heuwerbungsmaschine 1, auch Schwader genannt, mit insgesamt vier Arbeitskreiseln in drei verschiedenen Stellungen in einer Seitenansicht dargestellt. Die Maschine wird von einem Schlepper 4 gezogen und angetrieben. Wegen der Seitenansicht sind nur zwei Arbeitskreisel 2 und 3 zu erkennen. Die oben gezeigte Stellung ist die Arbeitsstellung, in der die Arbeitskreisel 2 und 3 durch ein Maschinengestell 5 waagrecht in geeignetem Abstand vom Boden geführt werden. Die in der Mitte gezeigte Stellung ist eine erste Transportstellung, in der die Arbeitskreisel 2 und 3 senkrecht nach oben geschwenkt sind, um die Maschine 1 auf eine für den Transport geeignete Breite zu bringen. Im Hinblick auf das Befahren unebenen Geländes besteht in dieser Stellung ein gewisser Abstand zum Boden. Die unten gezeigte Stellung ist eine zweite Transportstellung, in der die Arbeitskreisel 2 und 3 fast bis auf den Boden abgesenkt sind, um die Höhe der Maschine 1 fast bis auf das durch den Kreiseldurchmesser gegebene Minimalmaß zu verringern und so eine Durchfahrt durch Unterführungen oder Tore zu ermöglichen. Diese Stellung ist insbesondere auch als Parkstellung zum Abstellen der Maschine 1 in einer Scheune geeignet.

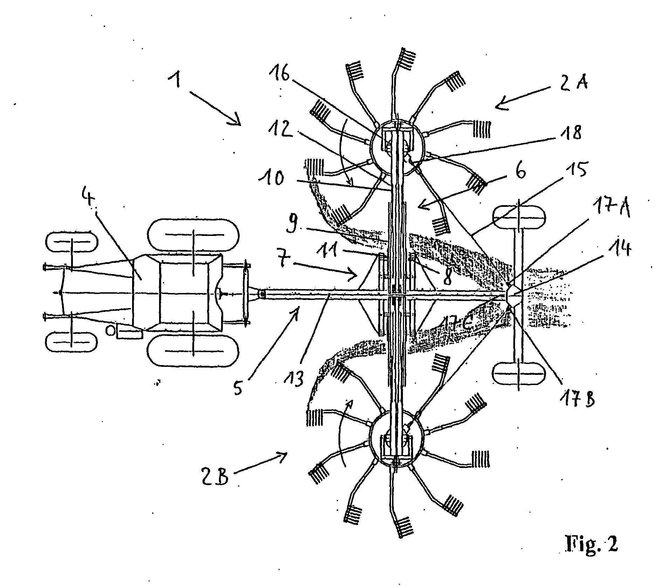

Eine Draufsicht auf eine erfindungsgemäße Heuwerbungsmaschine 1 mit nur zwei Arbeitskreiseln 2A und 2B in Arbeitsstellung zeigt Fig. 2, wobei die grundsätzliche Anwendbarkeit der Erfindung nicht von der Anzahl der Arbeitskreisel abhängt. Die Arbeitskreisel 2A und 2B drehen sich im Betreib der Maschine in entgegen gesetzter Richtung, wie es durch zwei Pfeile angedeutet ist. Aufgrund der Symmetrie der Maschine 1 in Bezug auf die Längsachse des Maschinengestells 5 genügt im folgenden eine Erläuterung anhand einer Seite.

Der Arbeitskreisel 2A wird von einem Ausleger 6 getragen, der über eine Lagerung 7 mit dem Maschinengestell 5 verbunden ist. Die Lagerung 7 ermöglicht eine Schwenkung des Auslegers 6 um einen Winkel von etwa 90° um eine parallel zur Längsachse des Maschinengestells 5 verlaufende Achse 8 zur Verbringung der Maschine 1 in eine Transportstellung. Es leuchtet ein, dass eine solche Schwenkung allein eine beträchtlich über dem Durchmesser eines Arbeitskreisels 2A oder 2B liegende Gesamthöhe der Maschine 1 in ihrer Transportstellung zur Folge hätte.

Um den Arbeitskreisel 2A nach dem Hochschwenken absenken zu können, ist der Ausleger 6 nach Art eines Teleskops ausgebildet, d.h. er weist ein Außenrohr 9 und ein längsverschiebbar in diesem gelagertes Innenrohr 10 auf. Das Außenrohr 9 ist schwenkbar an der Lagerung 7 gelagert und gelenkig mit einem Linearaktor in Form eines Hydraulikzylinders 11 verbunden, der auch an der Lagerung 7 angelenkt ist, und zwar so, dass eine Auslenkung des Hydraulikzylinders 11 in eine Schwenkung des Auslegers 6 um die Achse 8 umgesetzt wird.

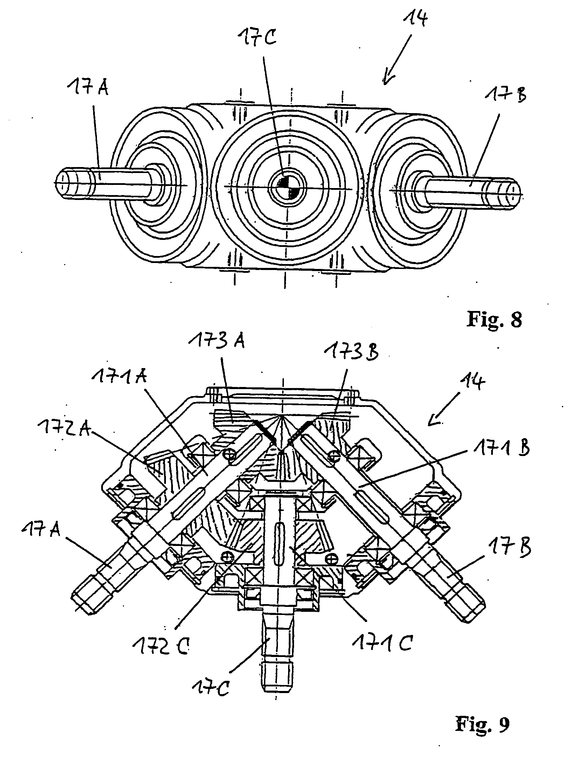

Zur Längsverschiebung des Innenrohres 10 gegenüber dem Außenrohr 9 ist ein weiterer Linearaktor in Form eines Hydraulikzylinders 12 vorgesehen, der einerseits an dem Außenrohr 9 und andererseits an dem Innenrohr 10 angelenkt ist. Dabei kann der Hydraulikzylinder 12 auch innerhalb des Auslegers 6, d.h. innerhalb des Innenrohres 10 oder zwischen dem Innenrohr 10 und dem Außenrohr 9 angeordnet sein. In Fig. 2 ist erkennbar, dass das Innenrohr 10 in der dort gezeigten Arbeitsstellung der Maschine 1 zumindest teilweise aus dem Außenrohr 9 ausgefahren ist. Es braucht aber keineswegs ganz, d.h. bis zum Ende seines Verfahrweges ausgefahren zu sein. Vielmehr läßt sich durch den Verfahrweg des Innenrohres 10 der Abstand des Arbeitskreisels 2A von der Längsmittelachse des Maschinengestells 5 und in Verbindung mit der gegenüberliegenden Seite der Maschine 1 der Arbeitsabstand der beiden Arbeitskreisel 2A und 2B einstellen, um eine Futterschwade mit einer gewünschten Breite zu erzielen, worauf später anhand Fig. 9 noch eingegangen wird.

Nur schematisch eingezeichnet ist in Fig. 2 der Antrieb der Arbeitskreisel 2A und 2B. Dieser erfolgt über eine mit einer rückwärtigen Abtriebswelle des Schleppers 4 gekuppelte, mittig entlang des Maschinengestells 5 verlaufenden Zentralantriebswelle 13, ein Zentralgetriebe 14, sowie auf der Seite des Arbeitskreisels 2A weiter über eine Kreiselantriebswelle 15 und ein Kreiselgetriebe 16. Es versteht sich, daß die beiden letztgenannten Antriebskomponenten auf der Seite des Arbeitskreisels 2B in symmetrischer Anordnung vorhanden sind. Nicht in der Zeichnung dargestellt ist die Tatsache, daß die Kreiselantriebswelle 15 ebenso wie der Ausleger 6 eine Teleskopstruktur mit zwei zueinander längsverschiebbaren konzentrischen Rohren verschiedenen Durchmessers oder eines Rohres und eines Stabes aufweist. Teleskopierbare Antriebswellen mit endseitigen Kardangelenken, auch Gelenkwellen genannt, sind als solche bekannt und brauchen hier nicht erläutert zu werden.

Wesentlich ist die Schrägstellung der Längsachse der Kreiselantriebswelle 15 sowohl gegenüber der Längsmittelachse des Maschinengestells 5, als auch gegenüber der Längsachse des Auslegers 6. Besagte Achsen bilden nämlich ein rechwinkeliges Dreieck, so daß nach dem Satz des Pythagoras eine Verkürzung des Auslegers um eine bestimmte Strecke mit einer deutlich geringeren Verkürzung der Kreiselantriebswelle 15 einhergeht. So beträgt beispielsweise bei einem Winkel von 45° zwischen den Längsachsen der Kreiselantriebswelle 15 und der Zentralantriebswelle 13 in der Arbeitsstellung, wie ihn in Fig. 2 ungefähr zeigt, bei einer Verkürzung des Auslegers 6, die einer Halbierung des Abstandes der Kreiseldrehachse von der Längsmittelachse des Maschinengestells 5 entspricht, die damit einhergehende Verkürzung der Kreiselantriebswelle 15 nur etwa 60% der Verkürzung des Auslegers 6. Dies ist im Hinblick auf den eingeschränkten Längeneinstellbereich von Teleskopantriebswellen von entscheidendem Vorteil.

In Fig. 2 sind an dem Zentralgetriebe 14 sowie an dem Kreiselgetriebe 16 jeweils ein Anschlussstummel 17A bzw. 18 zu sehen, die so ausgerichtet sind, dass sie näherungsweise miteinander fluchten. Die Längsrichtungen dieser sichtbaren Anschlussstummel 17A und 18 entsprechen den Richtungen der Drehachsen der Abtriebswelle des Zentralgetriebes bzw. der Antriebswelle des Kreiselgetriebes 16. Bei der Ausbildung der Kreiselantriebswelle 15 als Gelenkwelle mit Kardangelenken an beiden Enden kann zwar ein seitlicher Versatz und auch eine Winkelabweichung zwischen den Anschlussstummeln 17A und 18 bis zu einem gewissen Ausmaß toleriert werden, doch wäre es bei dem relativ großen Winkel zwischen der Kreiselantriebswelle 15 und dem Ausleger 6, wie er in Fig. 2 gezeigt ist, nicht mehr möglich, ein Zentralgetriebe 14 mit zur Antriebsachse senkrechten Abtriebsachsen zu verwenden, oder den kreiselseitigen Anschlussstummel 18 parallel zum Ausleger 6 auszurichten, da dies die Ausgleichwirkung einer Gelenkwelle überfordern würde. Die Ausrichtung der Anschlussstummel 17A und 18 zueinander muss also an die Schrägstellung der Kreiselantriebswelle 15 angepasst werden.

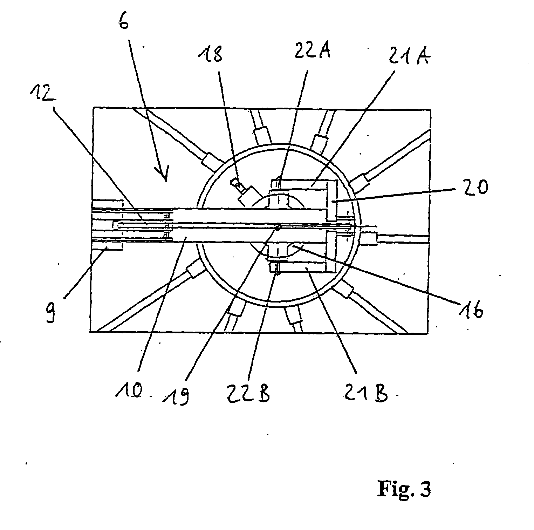

Ein wichtiges Detail aus Fig. 2, nämlich die Befestigung des Arbeitskreisels 2A am Ende des Auslegers 6, ist in Fig. 3 vergrößert dargestellt. Wie dort zu erkennen ist, endet das Innenrohr 10 des Auslegers 6 nicht an der Drehachse 19 des Arbeitskreisels 2A oder davor, sondern es erstreckt sich ein Stück weit über die Drehachse 19 hinaus. Am Ende des Innenrohres 10 erstreckt sich in Querrichtung eine fest mit dem Innenrohr 10 verbundene Brücke 20, von der aus zwei Tragwinkel 21A und 21B bis auf die Höhe der Kreiseldrehachse 19 zurückragen. Die Tragwinkel 21A und 21B erstrecken sich von den Enden der Brücke 20 aus zunächst senkrecht nach unten, was in der Ansicht von Fig. 3 nicht sichtbar ist, und anschließend erst waagrecht zurück bis zur Drehachse 19 des Arbeitskreisels 2A. Dort sind sie über Drehgelenke 22A bzw. 22B mit dem Gehäuse des Kreiselgetriebes 16 verbunden. An letzterem ist in Fig. 3 noch der Anschlussstummel 18 erkennbar, der zum Ankuppeln der Kreiselantriebswelle 15 bestimmt ist.

Die Länge der senkrechten Abschnitte der Tragwinkel 21A und 21B ist so bemessen dass der Abstand der Unterseite des Innenrohres 10 von der Oberseite des Gehäuses des Kreiselgetriebes 16 dazu ausreicht, dass das Innenrohr 10 mittels des Hydraulikzylinders 12 so weit in das Außenrohr 9 eingezogen werden kann, bis das Ende des Außenrohres 9 an der Brücke 20 anschlägt. Durch diese Gestaltung der Befestigung des Arbeitskreisels 2A an dem Ausleger 6 ergibt sich ein erweiterter Verkürzungsbereich der Auslegerlänge.

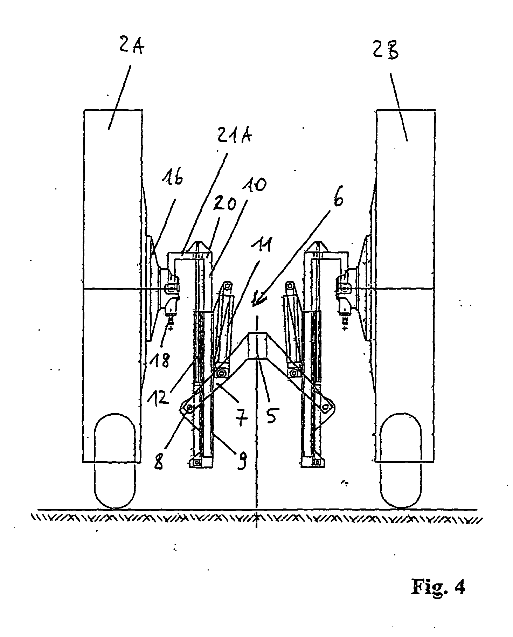

Fig. 4 zeigt eine Vorderansicht der erfindungsgemäßen Heuwerbungsmaschine 1 in einer ersten Transportstellung, in der die beiden Arbeitskreisel 2A und 2B senkrecht hochgeklappt und teilweise abgesenkt sind. Diese Stellung entspricht der mittleren der in Fig. 1 gezeigten Stellungen. Die eingetragenen Bezugszahlen entsprechen denjenigen der vorausgehenden Figuren 1 und 2. Der Hydraulikzylinder 11 ist ganz eingefahren, um den Ausleger 6 und damit auch den Arbeitskreisel 2A senkrecht nach oben zu klappen. Der Hydraulikzylinder 12 ist in dieser Stellung zur Absenkung des Arbeitskreisels 2A teilweise eingefahren. Die Kreiselantriebswellen und das Zentralgetriebe 14 sind in Fig. 4 der Übersichtlichkeit halber nicht dargestellt.

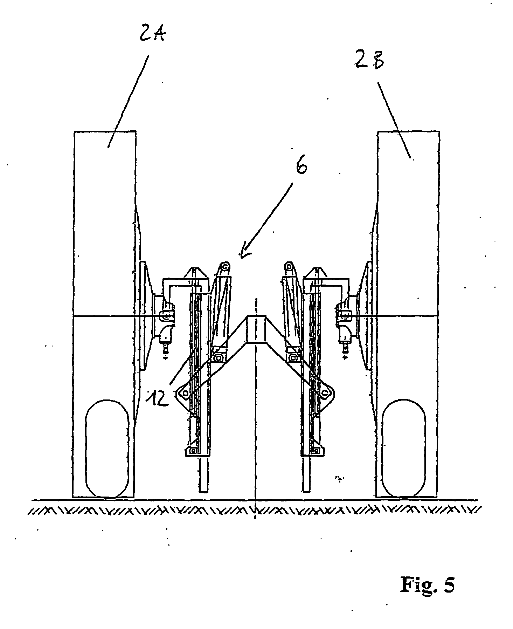

Fig. 5 zeigt eine Vorderansicht der erfindungsgemäßen Heuwerbungsmaschine 1 in einer zweiten Transportstellung, in der die beiden Arbeitskreisel 2A und 2B senkrecht hochgeklappt und vollständig, d.h. bis fast auf den Boden abgesenkt sind. Diese Stellung entspricht der unteren der in Fig. 1 gezeigten Stellungen. Der Hydraulikzylinder 12 ist in dieser Stellung im Unterschied zu derjenigen von Fig. 4 zur weiteren Absenkung des Arbeitskreisels 2A nahezu vollständig eingefahren. Auch in Fig. 5 sind die Kreiselantriebswellen und das Zentralgetriebe 14 weggelassen.

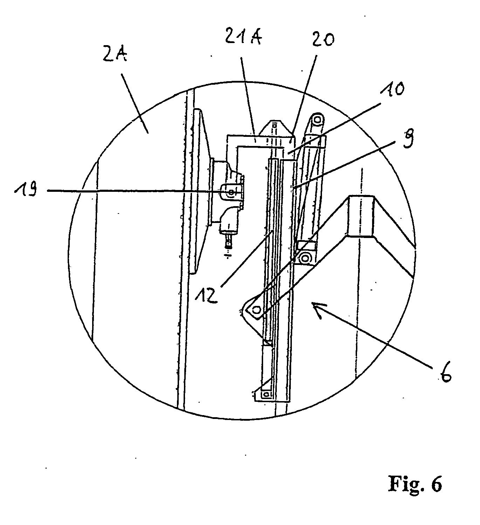

Einen vergrößerten Ausschnitt aus Fig. 5, nämlich den Bereich des Auslegers 6, zeigt Fig. 6. Darin ist deutlich sichtbar, wie das Außenrohr 9 des Auslegers 6 die Drehachse 19 des Arbeitskreisels 2A überragt und fast bis zu der Brücke 20 reicht. Es wird deutlich, wie durch die Gestaltung der Befestigung des Gehäuses des Kreiselgetriebes 16 am Ende des Innenrohres 10 mit Hilfe der Brücke 20 und der zurückragenden Tragwinkel 21A und 21B einzusätzlicher Spielraum für die Absenkung des Arbeitskreisels 2A geschaffen wird.

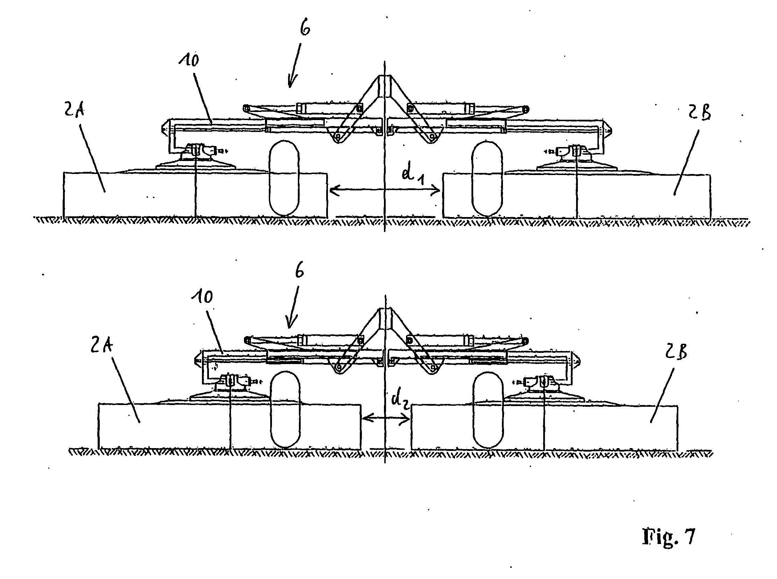

Fig. 7 veranschaulicht in einer Ansicht von vorne der erfindungsgemäßen Maschine 1 in der Arbeitsstellung, die der oberen Stellung in Fig. 1 entspricht, die Zusatzfunktion der Längenverstellung der Ausleger zur Einstellung des Arbeitsabstandes der Arbeitskreisel 2A und 2B, welcher die Breite der erzeugten Futterschwaden bestimmt. In der oberen Stellung sind das Innenrohr 10 des Auslegers 6 und dasjenige des gegenüberliegenden Auslegers symmetrisch dazu so weit ausgefahren, dass sich ein Arbeitsabstand d₁ ergibt. In der unteren Stellung sind das Innenrohr 10 des Auslegers 6 und dasjenige des gegenüberliegenden Auslegers symmetrisch dazu weniger weit ausgefahren, so dass sich ein geringerer Arbeitsabstand d₂ ergibt.

Fig. 8 zeigt eine Ansicht von vorne des Zentralgetriebes 14 mit den Anschlussstummeln 17A, 17B und 17C für die Kreiselantriebswelle 15 des Kreisels 2A, für eine dazu symmetrische Kreiselantriebswelle des Kreisels 2B und für die Zentralantriebswelle 13. In Fig. 9 ist das Zentralgetriebe 14 in einem Schnitt von oben zu sehen. Die Anschlussstummel 17A, 17B und 17C sind nach außen ragende Abschnitte einer Abtriebswelle 171A, einer weiteren Abtriebswelle 171B und einer Antriebswelle 171C, die alle in dem Gehäuse des Zentralgetriebes 14 gelagert sind.

Die Antriebswelle 171C treibt über ein drehfest mit ihr verbundenes Kegelrad 172C und ein drehfest mit der Abtriebswelle 171A verbundenes Kegelrad 172A die Abtriebswelle 171A an. Diese treibt über ein weiteres drehfest mit ihr verbundenes Kegelrad 173A und ein drehfest mit der anderen Abtriebswelle 171B verbundenes Kegelrad 173B die andere Abtriebswelle 171B an. Der Umweg von der Antriebswelle 171C über die erste Abtriebswelle 171A zur zweiten Abtriebswelle 171B ist nötig, um eine gegensinnige Drehrichtung der beiden Abtriebswellen 171A und 171B zu erzielen, damit bei gleicher Ausführung des Kreiselgetriebes 16 in beiden Arbeitskreiseln 2A und 2B eine gegensinnige Drehrichtung der Arbeitskreisel 2A und 2B entsteht. Der Winkel zwischen den beiden Abtriebswellen 171A und 171B des Zentralgetriebes 14 liegt vorzugsweise in einem Bereich zwischen 60° und 150°.

Die Erfindung wurde vorausgehend anhand einer Heuwerbungsmaschine mit zwei Arbeitskreiseln erläutert. Es versteht sich aber, dass sie ebenso gut auf Heuwerbungsmaschinen mit mehr als zwei Arbeitskreiseln angewendet werden kann. Auch könnten als Aktoren nicht nur Hydraulikzylinder, sondern beispielsweise auch elektrische Antriebe verwendet werden. Soweit von Rohren als Bestandteilen der Ausleger die Rede war, soll dies keinerlei Beschränkung des Querschnittprofils der relativ zueinander verschiebbaren Elemente zum Ausdruck bringen. Insbesondere kann das Querschnittsprofil auch eckig sein und es muss auch nicht geschlossen sein, sondern es genügt die Fähigkeit zur Bildung einer Linearführung für eine Relativbewegung der einen Ausleger bildenden Elemente in Längsrichtung desselben. Ebenso muss nicht das Element mit der größeren Querschnittsfläche am Maschinengestell fixiert und dasjenige mit der kleineren verschiebbar sein, sondern es könnte auch umgekehrt sein. Auch eine Teleskopausbildung mit mehr als zwei koaxial verschiebbaren Elementen ist grundsätzlich möglich. Solche und ähnliche Abwandlungen der Erfindung liegen im fachmännischen Ermessen und sollen vom Schutz der Patentansprüche umfasst sein.

## Patentansprüche

1. Heuwerbungsmaschine mit einem Maschinengestell und mit an längenveränderlichen, eine Teleskopstruktur mit einem Außenrohr und einem längsverschiebbar in diesem gelagerten Innenrohr oder Innenstab aufweisenden Auslegern gelagerten Arbeitskreiseln, die zum Transport um in Fahrtrichtung liegende Schwenkachsen hochklappbar sind, **dadurch gekennzeichnet, dass** zum Antrieb eines Arbeitskreisels (2A) jeweils eine Kreiselantriebswelle (15) vorgesehen ist, die zwischen einem am Maschinengestell angeordneten Zentralgetriebe (14) und einem an dem Arbeitskreisel (2A) angeordneten Kreiselgetriebe (16) so angeordnet sind, dass die Längsachse einer Kreiselantriebswelle (15) mit der Längsachse des Maschinengestells (5) und der Längsachse eines den angetriebenen Kreisel (2A) tragenden Auslegers (6) jeweils ein Dreieck bildet, und dass das Ende des Auslegers (6) über die Drehachse (19) des von dem Ausleger (6) getragenen Arbeitskreisels (2A) hinausragt und der Arbeitskreisel (2A) über mindestens ein vom Ende des Innenrohres (10) oder Innenstabes des Auslegers (6) aus zurückragendes Verbindungsglied (21A, 21B) so an dem Innenrohr (10) oder der Innenstab befestigt ist, dass das Innenrohr (10) oder der Innenstab über die Drehachse (19) des Arbeitskreisels (2A) hinaus in das Außenrohr (9) einschiebbar ist.

2. Heuwerbungsmaschine nach Anspruch 1, **dadurch gekennzeichnet, dass** zur Verschiebung des Innenrohrs (10) gegenüber dem Außenrohr (9) ein Linearaktor (12) im Inneren des Auslegers (6) und dabei zumindest im Inneren des Außenrohres (9) angeordnet ist.

3. Heuwerbungsmaschine nach Anspruch 1 oder 2, **dadurch gekennzeichnet, dass** die Kreiselantriebswelle (15) jeweils eine Teleskopstruktur mit einem Außenrohr und einem längsverschiebbar in diesem gelagerten Innenrohr (10) oder Innenstab aufweist.

4. Heuwerbungsmaschine nach einem der Ansprüche 1 bis 3, **dadurch gekennzeichnet, dass** die Kreiselantriebswelle (15) eine Gelenkwelle mit einem Kardangelenk an mindestens einem Ende ist.

5. Heuwerbungsmaschine nach einem der Ansprüche 1 bis 4, **dadurch gekennzeichnet, dass** der Arbeitskreisel (2A) im hochgeklappten Zustand mittels der Teleskopstruktur des Auslegers (6) so weit absenkbar ist, dass er mit seinem Rand nahezu den Boden berührt.

6. Heuwerbungsmaschine nach einem der Ansprüche 1 bis 5, **dadurch gekennzeichnet, dass** die Drehachsen der Abtriebswellen (171A, 171B) des Zentralgetriebes (14) schräg zu derjenigen seiner Antriebswelle (171C) verlaufen.

7. Heuwerbungsmaschine nach Anspruch 6, **dadurch gekennzeichnet, dass** die Drehachse der Antriebswelle eines Kreiselgetriebes (16) schräg zur Längsrichtung des den Arbeitskreisel (2A) tragenden Auslegers (6) verläuft und näherungsweise mit der Drehachse der ihr zugeordneten Abtriebswelle (171A) des Zentralgetriebes (14) fluchtet.

## Claims

1. Hay-making machine with a machine frame and with working rotors which are mounted on variable-length arms exhibiting a telescopic structure with an outer tube and an inner tube or inner rod mounted displaceable longitudinally in the outer tube and which can be swung up about pivot axes lying in the direction of travel for transport, **characterised in that** in each case a rotor driving shaft (15) is provided to drive a working rotor (2A), these shafts being arranged between a central gearbox (14) arranged on the machine frame and a rotor gearbox (16) arranged on the working rotor (2A) so that the longitudinal axis of a rotor driving shaft (15) forms a triangle with the longitudinal axis of the machine frame (5) and the longitudinal axis of an arm (6) carrying the driven rotor (2A), and **in that** the end of the arm (6) extends beyond the axis of rotation (19) of the working rotor (2A) carried by the arm (6) and the working rotor (2A) is fastened to the inner tube (10) or the inner rod by means of at least one connecting member (21A, 21B) extending back from the end of the inner tube (10) or inner rod of the arm (6) so that the inner tube (10) or the inner rod can be slid into the outer tube (9) beyond the axis of rotation (19) of the working rotor (2A).

2. Hay-making machine according to claim 1, **characterised in that** a linear actuator (12) is arranged in the interior of the arm (6) and thus at least in the interior of the outer tube (9) to displace the inner tube (10) in relation to the outer tube (9).

3. Hay-making machine according to claim 1 or 2, **characterised in that** in each case the rotor driving shaft (15) exhibits a telescopic structure with an outer tube and an inner tube (10) or inner rod mounted displaceable longitudinally in the outer tube.

4. Hay-making machine according to one of claims 1 to 3, **characterised in that** the rotor driving shaft (15) is a universal shaft with a universal joint at one end at least.

5. Hay-making machine according to one of claims 1 to 4, **characterised in that** when swung up, the working rotor (2A) can be lowered by means of the telescopic structure of the arm (6) until it almost touches the ground with its edge.

6. Hay-making machine according to one of claims 1 to 5, **characterised in that** the axes of rotation of the output shafts (171A, 171B) of the central gearbox (15) run at an oblique angle to that of its input shaft (171C).

7. Hay-making machine according to claim 6, **characterised in that** the axis of rotation of the input shaft of a rotor gearbox (16) runs at an oblique angle to the longitudinal direction of the arm (6) carrying the working rotor (2A) and approximately lines up with the axis of rotation of the output shaft (171A) of the central gearbox (14) associated with it.

## Revendications

1. Machine de fenaison dotée d'un bâti de machine et de toupies de travail logées sur des consoles à longueur variable comprenant une structure télescopique dotée d'un tube extérieur et d'un tube intérieur ou d'une barre intérieure logée de manière à pouvoir se déplacer longitudinalement dans celui-ci, lesquelles toupies, en vue du transport, peuvent basculer vers le haut autour d'axes de pivotement situés dans le sens de marche, **caractérisée en ce que** pour entraîner une toupie de travail (2A), respectivement un arbre d'entraînement de toupie (15) est prévu, qui sont disposés entre une transmission centrale (14) disposée sur le bâti de machine et une transmission de toupie (16) disposée sur la toupie de travail (2A), de sorte que l'axe longitudinal d'un arbre d'entraînement de toupie (15) forme, avec l'axe longitudinal du bâti de machine (5) et l'axe longitudinal d'une console (6) portant la toupie (2A) entraînée, respectivement un triangle, et **en ce que** l'extrémité de la console (6) dépasse de l'axe de rotation (19) de la toupie de travail (2A) portée par la console (6) et la toupie de travail (2A) est fixée, par au moins un organe de liaison (21A, 21B) faisant saillie depuis l'extrémité du tube intérieur (10) ou de la barre intérieure de la console (6), au tube intérieur (10) ou à la barre intérieure de sorte que le tube intérieur (10) ou la barre intérieure peut être introduite, dans le tube extérieur (9), plus loin que l'axe de rotation (19) de la toupie de travail (2A).

2. Machine de fenaison selon la revendication 1, **caractérisée en ce que** pour déplacer le tube intérieur (10) par rapport au tube extérieur (9), un actionneur linéaire (12) est disposé à l'intérieur de la console (6) et dans ce cas au moins à l'intérieur du tube extérieur (9).

3. Machine de fenaison selon la revendication 1 ou 2, **caractérisée en ce que** l'arbre d'entraînement de toupie (15) comprend respectivement une structure télescopique dotée d'un tube extérieur et d'un tube intérieur (10) ou d'une barre intérieure logée de manière à se déplacer longitudinalement dans celui-ci.

4. Machine de fenaison selon l'une quelconque des revendications 1 à 3, **caractérisée en ce que** l'arbre d'entraînement de toupie (15) est un arbre de transmission comprenant un joint de Cardan sur au moins une de ses extrémités.

5. Machine de fenaison selon l'une quelconque des revendications 1 à 4, **caractérisée en ce que** la toupie de travail (2A), à l'état basculé vers le haut, peut être abaissée au moyen de la structure télescopique de la console (6) jusqu'à ce qu'elle touche presque le sol avec son bord.

6. Machine de fenaison selon l'une quelconque des revendications 1 à 5, **caractérisée en ce que** les axes de rotation des arbres d'entraînement (171A, 171B) de la transmission centrale (14) s'étendent de manière oblique par rapport à ceux de son arbre d'entraînement (171C).

7. Machine de fenaison selon la revendication 6, **caractérisée en ce que** l'axe de rotation de l'arbre d'entraînement d'une transmission de toupie (16) s'étend de manière oblique par rapport à la direction longitudinale de la console (6) portant la toupie de travail (2A) et s'aligne à peu près sur l'axe de rotation de l'arbre d'entraînement (171A), qui lui est associé, de la transmission centrale (14).
